# EUROPEAN PATENT SPECIFICATION

(11) **EP 2 920 239 B1**
(45) Date of publication and mention of the grant of the patent: **14.09.2016**
(21) Application number: 12784286.2
(22) Date of filing: 15.11.2012
(51) Int. Cl.: C08K 5/23, C08L 23/02, C08J 3/24, C08L 23/36, H01B 9/02, H01B 3/44

(54) **CHEMICALLY CROSS-LINKED POLYETHYLENE USED FOR ELECTRICAL INSULATION**
CHEMISCH VERNETZTES POLYETHYLEN FÜR ELEKTRISCHE ISOLIERUNG
POLYÉTHYLÈNE CHIMIQUEMENT RÉTICULÉ UTILISÉ POUR L'ISOLATION ÉLECTRIQUE

(43) Date of publication of application: 23.09.2015
(73) Proprietor: ABB Research Ltd., 8050 Zürich (CH)
(72) Inventor: HO, Chau-Hon, CH-4332 Stein (CH); LOGAKIS, Emmanuel, CH-5405 Baden-Daettwil (CH); GHOUL, Cherif, Raleigh, NC 27601 (US); KRIVDA, Andrej, CH-5430 Wettingen (CH)
(74) Representative: Axell, Kristina
(86) International application number: PCT/EP2012/072714
(87) International publication number: WO 2014/075726

(56) References cited:
- US-B2- 7 235 609
- MÉLANIE AUBERT ET AL: "Azoalkanes: A Novel Class of Additives for Cross-Linking and Controlled Degradation of Polyolefins", MACROMOLECULAR MATERIALS AND ENGINEERING, vol. 292, no. 6, 11 June 2007 (2007-06-11) , pages 707-714, XP055063310, ISSN: 1438-7492, DOI: 10.1002/mame.200600498 cited in the application
- DATABASE WPI Week 201163 Thomson Scientific, London, GB; AN 2011-K07721 XP002697390, -& CN 102 120 842 A (JIANGSU XINGHAI CABLE CO LTD) 13 July 2011 (2011-07-13)

## Description

### ELECTRICAL INSULATION

The present invention relates to a chemically cross-linked polyolefin that is free from polar by-products, a method for its manufacturing and its use for electrical cable insulation applications, in particular for HV DC cable insulation.

### TECHNICAL BACKGROUND

High voltage (HV) cables are used for electric power transmission at high voltage and HV cables of different types have a variety of applications in instruments, ignition systems, as well as AC and DC power transmission. In all applications, it is essential that the insulation of the cable does not deteriorate due to the high-voltage stress, ozone produced by electric discharges in air, or tracking. The cable system must prevent contact of the high-voltage conductor with other objects or persons, and must limit and control leakage current.

The polyolefin polyethylene, in particular low density polyethylene (LDPE), is widely used as insulation material in power devices, such as electrical cables and wires. LDPE is a branched polymer and is a partially (50-60%) crystalline solid with a melting point of about 115°C and a density in the range of 0.91-0.94 g/cm³.

Besides its superior electrical properties such as low permittivity and low losses, LDPE stands out with its low material costs and its thermoplastic nature which makes it suitable for cost-efficient extrusion and injection moulding processes.

However, in many final electrical applications, such as medium (MV) and high voltage (HV) cables, cross-linked polyethylene (XLPE or PEX) is applied. The main purpose for cross-linking of LDPE is the improvement of dimensional and therefore thermo-mechanical stability while keeping the high flexibility. XLPE does not melt and therefore no large softening and loss of shape will occur above 110 °C. This permits higher conductor operating temperature and reduces the level of short circuit and overload protection required. For that reason XLPE is very well suited as main insulation in extruded HV AC cables, which operate with a rated maximum conductor temperature of 90°C and a 250°C short circuit rating.

Material to be used for insulation of cables for DC power transmission requires high resistivity and absence of local high electric fields to prevent dielectric breakdown. High resistivity reduces leakage current and suppresses heat generation. Local high electric fields are generated by space charge formation and lower the insulation performance. Especially for high voltage DC applications, such as at a voltage > 320 kV, low electrical conductivity is crucial in order to avoid thermal runaway effect and pre-mature breakdown (Nussin, N et al., Space charge accumulation and conductivity of cross-linking by-products soaked LDPE; Conference on Electrical Insulation and Dielectric Phenomena (CEIDP), 2010 Annual Report, 17-20 Oct. 2010, 1-4).

The cross-linking of LDPE is carried out either chemically, such as by addition of cross-linking agents, for example peroxides or silanes, or physically via irradiation. Chemical cross-linking of low-density polyethylene is commonly carried out by reaction of dicumyl peroxide (DCP) or silane cross-linking agents with the polyethylene during the cable manufacturing process.

HV cable manufacturing is commonly carried out by extrusion of LDPE together with the cross-linking agent and the cross-linking may be accomplished during the extrusion or in a subsequent continuous vulcanization process. Premature cross-linking during the extrusion might form clusters of oxidized polymer, referred to as scorch. Scorch can act as impurities and defects that can lead to premature failure. (Thue, W; Electrical Power Cable Engineering, 3rd ed. (2012) ISBN 978-1-4398-5643-7).

In case of DCP and cable applications, the cross-linking reaction occurs during extrusion in the cable manufacturing process by reaction of LDPE with DCP. DCP decomposes and liberates a free radical that will abstract a hydrogen atom from the polyethylene chain. This abstraction site on the polyethylene chain then becomes a reactive radical and forms a cross-linked bond with another reactive radical of the same or a different polyethylene chain. The reaction occurs until all peroxide is consumed or the temperature falls below the decomposition point (Narkis M, et al., J Appl Polym Sci, 14 (1970) 65 and Kumar Sen, et al., J Appl Polym Sci, 44 (1992) 183).

Silane cross-linked polyethylene (Si-XLPE) is used as insulation material in low (LV) and medium voltage (MV) cables. Si-XLPE is manufactured in two steps: In the first step, i.e. during the actual cable extrusion, the silane coupling agent, usually a vinyl alkoxy silane (mostly vinyl trimethoxy silane), is grafted on the polyethylene. After cooling of the cable, the cross-linking reaction is carried out in the second post-extrusion step, where the cable is placed in a hot water bath or steam room. The cross-linking of the modified polyethylene is carried out by hydrolysis of the grafted alkoxy groups forming silanol units which reacts with each other to stable siloxane bonds and therefore crosslinks.

The reaction for cross-linking of polyethylene with different azo compounds has been described in various patents and publications (e.g. US3152107, US 3862107, US4209597, CA1191988, and Aubert, M.; et al, Macromolecular Materials and Engineering 2007, 292, 707-714).

The electrical insulation properties of HV cables are impaired by inclusions, cavities or other defects of the same sort of size and space charge tends to build up at these kinds of discontinuities in the material. Under the influence of the electric field the trapped charges may begin to detrap and move. Space charges within solid dielectrics are often a contributing factor leading to dielectric failure within HV power cables. It is important to control and minimize defects in the cable material.

There is still a need for improving the manufacturing process as well as the performance of high voltage cables.

### SUMMARY OF THE INVENTION

An object with the present application is to provide a chemically cross-linked polyolefin that is free of polar by-products and that can be used as electrical cable insulation material. The absence of polar species makes this insulation material suitable especially for high and ultra-high voltages (> 500 kV) in DC applications, in particular for cable and HVDC applications.

A further object of the present invention is to provide a method for cross-linking a polyolefin to provide an insulation material without substantially increasing the DC conductivity compared with the DC conductivity of the corresponding polyolefin before being cross-linked by the method.

In one aspect, the present invention relates to a method of manufacturing chemically cross-linked polyolefin by mixing a polyolefin with an azo compound of formula (I) 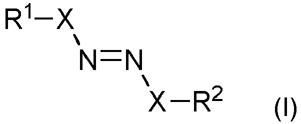 wherein
X is a bond or an oxy-carbonyl group, and
R¹ and R² are each independently selected from non-polar moieties,
such as alkyl, cycloalkyl and aryl.

The present invention further relates to a high voltage DC cable comprising an electrical insulation material, wherein the electrical insulation material comprises a cross-linked polyolefin obtainable by mixing a polyolefin with an azo compound of formula (I) 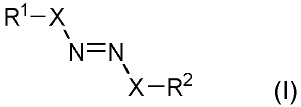 wherein
X is a bond or an oxy-carbonyl (-C(O)-O-) group, and
R¹ and R² are each independently selected from non-polar moieties.

Further the present invention relates to a method for manufacturing a high voltage DC cable, by mixing a polyolefin with an azo compound of formula (I) 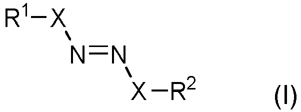 wherein
X is a bond or an oxy-carbonyl (-C(O)-O-) group, and
R¹ and R² are each independently selected from non-polar moieties,
in an extrusion process.

Further the present invention relates to a use of a cross-linked polyolefin obtained by mixing a polyolefin with an azo compound of formula (I) 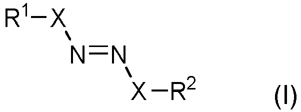 wherein
X is a bond or an oxy-carbonyl (-C(O)-O-) group, and
R¹ and R² are each independently selected from non-polar moieties,
as an electrical insulation material in a high voltage DC application.

In further aspects the present invention relates to cross-linked polyolefins obtainable by the method of the present invention; and the use of chemically cross-linked polyolefins made according to the method for electrical cable insulation applications, in particular for HV DC cable insulation.

### BRIEF DESCRIPTION OF THE DRAWINGS

Figure 1 presents FTIR spectra of non-cross-linked polyethylene and polyethylene cross-linked with di-*tert*-butyl azodicarboxylate and dicumyl peroxide.
Figure 2 presents FTIR spectra over pure 2,4,6-triallylcyanurate (TAC) and polyethylene cross-linked with 2 wt-% DBAC and 2 wt-% TAC.

### DETAILED DESCRIPTION OF THE INVENTION

One aspect of the present invention relates to a method for manufacturing a cross-linked polyolefin by mixing a polyolefin with an azo compound of formula (I) 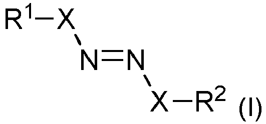 wherein
X is a bond or an oxy-carbonyl (-C(O)-O-) group, and
R¹ and R² are each independently selected from non-polar moieties, such as alkyl, cycloalkyl and aryl.

Throughout the present application the term "polyolefin" denotes a polymer produced from an alkene having the general formula CₙH₂ₙ as a monomer. Examples of polyolefins are polyethylene (PE), such as ultra-high-molecular-weight polyethylene (UHMWPE), ultra-low-molecular-weight polyethylene (ULMWPE or PE-WAX), high-molecular-weight polyethylene (HMWPE), high-density polyethylene (HDPE), medium-density polyethylene (MDPE), linear low-density polyethylene (LLDPE), low-density polyethylene (LDPE), and very-low-density polyethylene (VLDPE); polypropylene (PP); polymethylpentene (PMP); and polybutene-1 (PB-1).

Preferably the polyolefin is polyethylene, more preferably low-density polyethylene.

Preferably, the present invention relates to a method for manufacturing cross-linked polyethylene (XLPE).

Preferably, the azo compound used in the method according to the present invention, is a dialkyl azodicarboxylate or dialkyl diazene of formula (II) or (III), respectively: 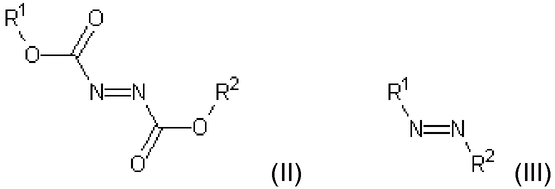 wherein R¹ and R² are each independently selected from linear or branched alkyl, cycloalkyl and aryl.

Preferably, R¹ and R² are each independently selected from linear or branched C₁₋₁₂-alkyl, C₃₋₁₂-cycloalkyl and phenyl, wherein the phenyl may be unsubstituted or substituted in one or two positions. Suitable substituents on phenyl are independently selected from the group consisting of linear or branched C₁₋₄-alkyl; such as methyl, ethyl, n-propyl,i-propyl, n-butyl and t-butyl.

More preferably, R¹ and R² are each independently selected from methyl, ethyl, n-propyl,isopropyl, n-butyl, isobutyl, tert-butyl, n- pentyl, isopentyl, neopentyl or n-hexyl, isohexyl, neohexyl, cyclopropane, cyclobutane, cyclopentane and cyclohexane.

Even more preferably, R¹ and R² are both t-butyl.

More preferably, the azo compund is di-*tert*-butyl azodicarboxylate (DBAC).

The cross-linking mechanism is based on the dissociation of the azo compound at elevated temperature and the generation of non-polar moieties, such as alkyl, cycloalkyl or aryl radicals, from R¹ and R², under the elimination of nitrogen and, in the case wherein X is an oxy-carbonyl, also carbon dioxide. The formed radicals react with the polyolefin under formation of hydrogen and alkene, cycloalkene or aromatic species, depending on the definition of R¹ and R², leading to cleavage of C-H bonds and generation of carbon radicals along the polymer chain. These radicals then recombine and form new C-C bonds - the cross-linking points.

In a conventionally cured product the end use applications can be affected by residual amounts of the cross-linking initiator or its decomposition products. It is known that volatile polar by-products, such as cumyl alcohol and acetophenone resulting from cross-linking of polyethylene with DCP, impair electrical insulation properties, such as space charge behaviour, and increase the conductivity of the material (Yutao, Z. et al., Dielectrics and Electrical Insulation, IEEE Transactions on 1999, 6, 164-168 and Farkas, A. et al., Development of high performance polymeric materials for HVDC cables; 2011 8th International Conference on Insulated Power Cables, Jicable 2011). Volatility of polar by-products causes a non-steady system with local differences of polar by-product concentration and therefore local field enhancements. The volatile polar by-products may generate charges due to high polarity. Further, inhomogeneous and continuously changing distribution of by-products due to volatility causes local concentration differences that may lead to local electric field enhancements and finally breakdown.

An advantage with the use of the azo compounds of formula (I) according to the present invention is that only non-polar by-products are formed from the used azo compounds.

Non-polar gaseous by-products produced by the method are nitrogen and, in the case wherein X is an oxy-carbonyl, also carbon dioxide, which both will evaporate immediately. Non-polar volatile by-products will be formed by using low molecular weights of the alkyl, cycloalkyl or aryl as substituents R¹ and R². These volatile by-products will evaporate together with other gases during the cross-linking reaction. This has the advantage that no further degassing step is required.

The process of degassing a cross-linked polyolefin made according to conventional methods is typically made at a high temperature, such as from about 50 to about 80°C, for several days, weeks or months. (Andrews, T, et al., The role of degassing in XLPE power cable manufacture. IEEE Electrical Insulation Magazine, 2006, 22,(6), 5-16; and Bamji, S. S, , et al., Thermoluminescence - An optical technique for in-situ measurement of cross-linking by-products during degassing of power cables. IEEE Electrical Insulation Magazine 2007, 23, (3), 16-22.

Further, degassing of cables on large drums is typically performed in large storage halls. Thus, a degassing process is highly cost-intensive. Since the method according to the present invention does not require a degassing step it is more efficient and makes the manufacturing more economic.

In one embodiment of the present invention non-polar alkyl-groups forming non-polar species that do not evaporate could also be used as substituents R¹ and R². These non-polar alkyl groups will form non-polar species that will stay in the polymer matrix but are not harmful with respect to electrical insulation properties.

The reaction between the azo compound di-*tert*-butyl azo dicarboxylate and low density polyethylene and the resulting XPLE and gaseous by-products that will evaporate automatically during the cross-linking reaction in the polymer melt is presented in the following non-stoichiometric reaction:

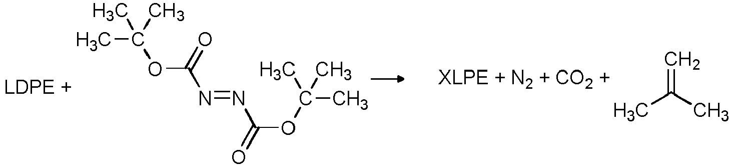

A further advantage of the method according to the present invention is that no polar by-products, such as acetophenone and cumyl alcohol, are generated. This has the effect that the cross-linked polyolefin obtained according to the present invention has lower conductivity compared to cross-linked polyolefins containing polar by-products. The absence of polar by-products reduces the risk for thermal runaway and pre-mature failure of the cable during operation.

Especially HV DC-cables are required to have a low DC conductivity in order to avoid thermal runaway and pre-mature failure of the cable during operation. The absence of polar species makes this insulation material suitable especially for high and ultra-high voltages (> 500 kV), in particular for cable and HVDC applications.

Further the insulation property of the cross-linked polyolefin of the present invention is not impaired compared with the corresponding polyolefin that is to be cross-linked with the method according to the present invention.

Throughout the present application the term "corresponding polyolefin" is used for the polyolefin that is used for cross-linking in the method according to the present invention, such as a non-cross-linked polyolefin.

The final DC conductivity of the cross-linked polyolefin according to the present invention depends on the DC conductivity of the corresponding polyolefin before it is cross-linked with the method according to the present invention.

In one aspect the present invention relates to a chemically cross-linked polyolefin obtainable by the method according to the present invention. Preferably, the chemically cross-linked polyolefin is cross-linked low-density polyolefin (XLPE).

The chemically cross-linked polyolefin obtainable by the method according to the present invention has a DC conductivity that is not more than twice as high as the DC conductivity of the corresponding polyolefin before it is cross-linked with said method.

Thus, the ratio of the DC conductivity of the chemically cross-linked polyolefin according to the present invention to the DC conductivity of the corresponding polyolefin before it is cross-linked with the method according to the present invention is not more than 2:1, preferably not more than 1:1.

Preferably, the DC conductivity of the cross-linked polyolefin is not increased compared with the corresponding polyolefin before it is cross-linked with the method according to the present invention.

Also preferably, the DC conductivity of the cross-linked polyolefin is below 10 x 10⁻¹⁵ S/m.

The DC conductivity, as used herein, is obtained by measuring 1 mm thick plates of the material with 20 kV/mm and also at 30 kV/mm at 70 °C after 100 hours.

The DC conductivity of the cross-linked polyolefin according to the present invention is measured without having subjected the cross-linked polyolefin to a foregoing degassing step.

Preferably the DC conductivity is measured on the cross-linked polyolefin within 1 month after the cross-linking process. Also preferably, the DC conductivity is measured on the cross-linked polyolefin within 1 week after the cross-linking process. Also preferably, the DC conductivity is measured on the cross-linked polyolefin just after the cross-linking process.

In one embodiment of the present invention the cross-linked polyolefin is free from polar by-products, such as acetophenone and cumyl alcohol and their derivatives.

In a further aspect the present invention relates to a chemically cross-linked polyolefin, preferably a chemically cross-linked polyethylene, more preferably a chemically cross-linked low-density polyethylene, obtained by the method of the present invention.

Another advantage with the use of the azo compounds according to the present invention for cross-linking polyolefins is their high decomposition temperature, usually above 120 °C depending on the moieties of the azo compound. This has the advantage that it is possible to homogenously blend the azo compound into the polyolefin via extrusion prior to the actual cross-linking reaction. It is important with uniform blending of the cross-linking agent to avoid discontinuities in the cross-linked material. The higher blending efficiency avoids uncontrolled exotherm reaction known as scorch, and also allows a homogenous distribution of the cross-linking.

In one embodiment of the present invention the polyolefin is compounded with the azo compound at a temperature above 130°C, preferably above 140°C.

Preferably, the polyolefin and the azo compound of formula (I) are mixed in an extrusion process, more preferably, a cable extrusion process.

Preferably, the cross-linking is carried out in the polymer melt, preferably at an elevated temperature, such as above 150°C, more preferably above 160°C, even more preferably between from 160 to 300 °C.

In one embodiment of the present invention the amount of the azo compound used is 0.01-20 weight-%, preferably from about 1 to about 3 weight-%. Additionally, further additives such as primary and secondary antioxidants; scorch retardant agents; and cross-linking intensifier, such as non-polar species with 2-3 vinyl groups, for example 2,4,6-triallyl cyanurate (TAC); may be used. Preferably, the additives are non-polar species. More preferably, the additives do not leave polar by-products in the material.

A further aspect of the present invention is a cable extrusion process, for example in a vertical or horizontal CV line, wherein the different components can be fed directly into the extruder, or preferably as a pre-formulated compound consisting of the polyolefin to be cross-linked, the azo cross-linking agent and further additives. The cross-linking of the polyolefin occurs in the polymer melt simultaneously during the part cable extrusion process. In order to avoid foaming of the material high pressure, preferably above 180 bar, needs to be applied during the cable extrusion process.

A further aspect of the present invention is a method for manufacturing a cable, preferably a high voltage cable, more preferably a HV DC cable, by mixing a polyolefin, preferably polyethylene, more preferably low-density polyethylene, with an azo compound of formula (I) 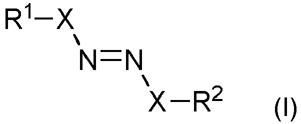 wherein
X is a bond or an oxy-carbonyl group, and
R¹ and R² are each independently selected from non-polar moieties, such as alkyl, cycloalkyl and aryl,
in an extrusion process.

Preferably, the extrusion process is a cable extrusion process.

In yet another aspect, the present invention relates to the use of a chemically cross-linked polyolefin according to the present invention as electrical insulation material; preferably in a power cable, a cable accessory, or a bushing; more preferably in a high-voltage cable; even more preferably in a high-voltage DC-cable.

In a further aspect, the present invention relates to an electrical insulation material, preferably an electrical cable insulation material, comprising cross-linked low-density polyolefin according to the present invention.

In yet a further aspect, the present invention relates to a power cable, preferably a high voltage cable, more preferably a high voltage DC-cable, comprising the cross-linked polyolefin a according to the present invention.

Still a further aspect of the present invention is the use of a cross-linked polyolefin according to the present invention as an electrical insulation material, preferably in a DC application, more preferably in a high voltage DC application.

Also an aspect of the present invention is the use of the cross-linked polyolefin according to the present invention, preferably as an insulating material, in a power cable, a cable accessory, or a bushing.

### EXAMPLES

### Example 1 preparation of cross-linked low-density polyethylene

One sample each of four different materials were prepared as follows: LDPE powder (0-300 µm particle size) was mixed vigorously with di-*tert*-butyl azo dicarboxylate DBAC (1-3 weight per cent) and for one sample also 2,4,6-triallylcyanurate (TAC) (2 weight per cent). Each mixture (ca. 30 g) was placed in a hot press using steel mould in order to manufacture a plate of 180 x 180 x 1 mm plate. The material was pressed at 200°C with approximately 180 bar.

As references, a sample of LDPE powder without a cross-linking initiator and another sample of LDPE powder and 1 % DCP was manufactured by analogue hot-pressing at 180°C.

The gel content - reflecting the degree of cross-linking density - was determined by Soxhlet extraction in para-xylene for 14 hours and determination of the using a sample of 1 g (cut from the plate). The gel content is presented in Table 1.

**Table 1**

| **Non-cross-linked and cross**-**linked polyethylene** | **Gel content** |
|---|---|
| no additives | 0 % |
| with 1 wt-% DBAC | ca. 30 % |
| with 3 wt-% DBAC | ca. 40 % |
| with 2 wt-% DBAC and 2 wt-% TAC | ca. 80 % |
| with 1 wt-% DCP | ca. 75 % |

The composition of the manufactured plate and therefore the content of polar by-products - e.g. containing carbonyl or ether groups - were evaluated by FT-IR spectroscopy using a Digilab FTS 40 Pro IR spectrometer from Portsmann Instruments with an ATR module and a MCT-detector.

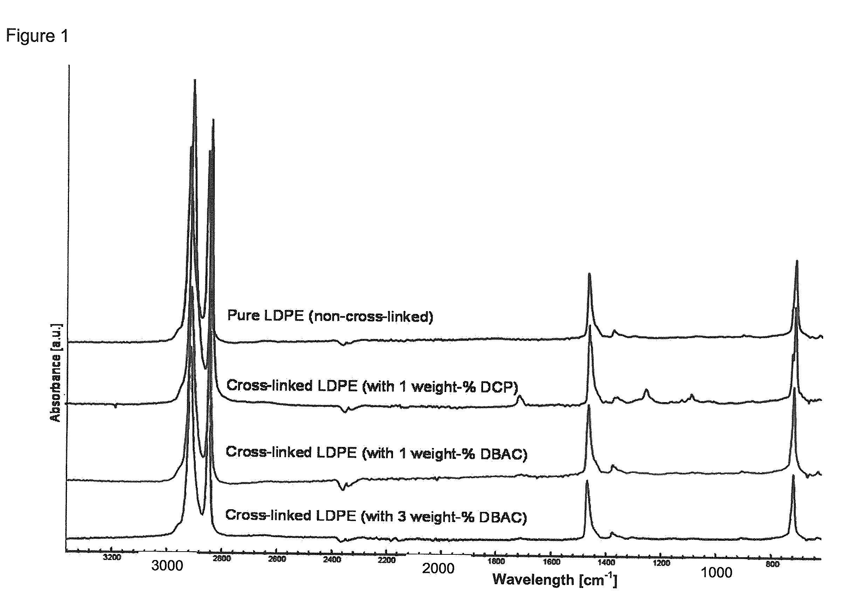

As seen in the FT-IR spectra (figure 1) from non-cross-linked (reference) and cross-linked polyethylene with di-*tert*-butyl azo dicarboxylate (1 and 3 wt-%), it is obvious that no polar by-products are present after cross-linking. In contrast, the FT-IR spectrum from a freshly prepared cross-linked polyethylene with 1 wt-% dicumyl peroxide shows significant peaks of polar by-products such as acetophenone and cumyl alcohol - as described also in many literature protocols.

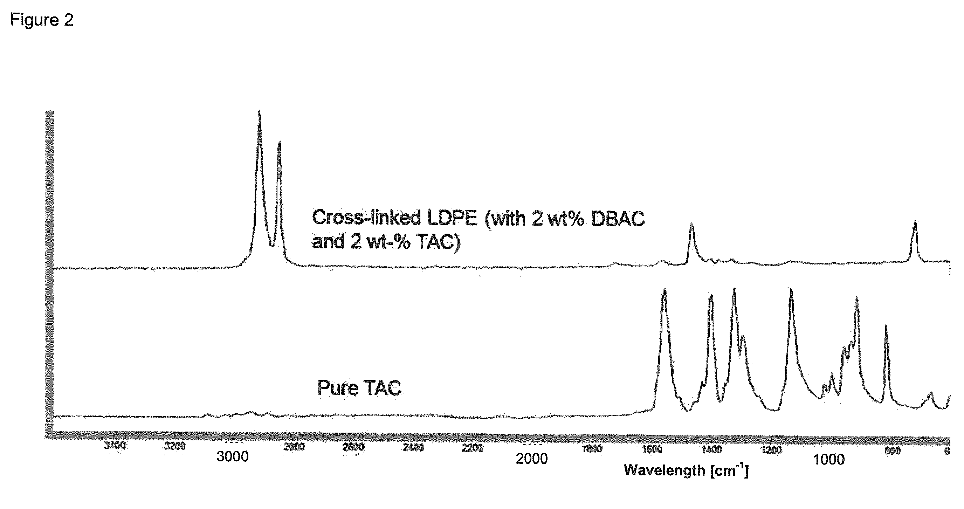

Also the freshly prepared cross-linked sample with 2 wt-% DBAC and 2 wt-% TAC shows no extensive characteristics peaks in the FT-IR spectrum (figure 2) in respect to polar by-products. When comparing the spectrum of this sample with the spectrum of pure TAC it is obvious that TAC was successfully incorporated in the XLPE network without leaving any polar by-products and functions as additional network point.

### Example 2 measurement of DC conductivity

For the DC conductivity measurements, a DC voltage of 20 kV/mm was applied to a three electrode system (40 mm round electrode diameter with guard electrode) and the leakage current was measured with a sensitive picoamperemeter (Keithley 6485). The measurements were performed on 1 mm thick plates at 70°C for up to 100 h. Values were measured for non-cross-linked LDPE as well as cross-linked LDPE with 1 wt-% DBAC, 2 wt-% DBAC with 2 wt-% TAC and 1 wt-% DCP made in Example 1. The values are presented in Table 2.

**Table 2**

| | **non-cross-linked LDPE** | **Cross-linked LDPE 1 wt% DBAC** | **Cross-linked LDPE 2 wt% DBAC 2 wt% TAC** | **Cross-linked LDPE 1 wt% DCP** |
|---|---|---|---|---|
| DC conductivity [S/m] | 8 x 10⁻¹⁵ | 3 x 10⁻¹⁵ | 1 x 10⁻¹⁵ | 60 x 10⁻¹⁵ |

Table 2 shows that the conductivity remains unchanged when LDPE is cross-linked with DBAC and also the combination of DBAC and TAC. The apparent lower value in case of cross-linked sample with 1 wt-% DBAC, as well as 2 wt-% DBAC with 2 wt-% TAC, compared to non-cross-linked LDPE, may relate to the error margin and noise level of the setup. In contrast, cross-linking LDPE with DCP shows a significant increase in conductivity ascribable to the presence of polar by-products - as also described by Yutao, Z. et al., IEEE Transactions on Dielectrics and Electrical Insulation, 1999 (6) 164-168; and Farkas, A. et al. 8th International Conference on Insulated Power Cables, Jicable 2011.

## Claims

1. A high voltage DC cable comprising an electrical insulation material, wherein the electrical insulation material comprises a cross-linked polyolefin obtainable by mixing a polyolefin with an azo compound of formula (I) 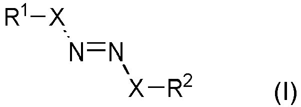 wherein
X is a bond or an oxy-carbonyl (-C(O)-O-) group, and
R¹ and R² are each independently selected from non-polar moieties.

2. The high voltage DC cable according to claim 1, wherein the polyolefin is polyethylene.

3. The high voltage DC cable according to claim 1 or 2, wherein R¹ and R² are each independently selected from alkyl, cycloalkyl and aryl.

4. The high voltage DC cable according to claim 1 or 2, wherein R¹ and R² are each independently selected from linear or branched C₁₋₁₂-alkyl, C₃₋₁₂cycloalkyl and phenyl, wherein the phenyl may be unsubstituted or substituted in one or two positions.

5. The high voltage DC cable according to claim 1 or 2, wherein the azo compound of formula (I) is di-*tert*-butyl azo dicarboxylate (DBAC).

6. The high voltage DC cable according to any one of claims 1 to 5, wherein the polyolefin is reacted with the azo compound of formula (I) in a polymer melt.

7. The high voltage DC cable according to any one of claims 1 to 6, wherein the polyolefin and the azo compound of formula (I) are mixed in an extrusion process.

8. The high voltage DC cable according to any one of claims 1 to 7, wherein the cross-linked polyolefin have a conductivity below 10 x 10⁻¹⁵ S/m, as determined according to the description.

9. A method for manufacturing a high voltage DC cable, **characterized by** mixing a polyolefin with an azo compound of formula (I) 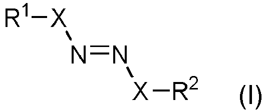 wherein
X is a bond or an oxy-carbonyl (-C(O)-O-) group, and
R¹ and R² are each independently selected from non-polar moieties,
in an extrusion process.

10. A method for manufacturing a cross-linked polyolefin according to claim 9, wherein the azo compound is di-*tert*-butyl azo dicarboxylate (DBAC).

11. Use of a cross-linked polyolefin obtained by mixing a polyolefin with an azo compound of formula (I) 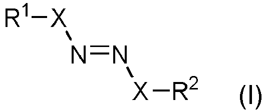 wherein
X is a bond or an oxy-carbonyl (-C(O)-O-) group, and
R¹ and R² are each independently selected from non-polar moieties,
as an electrical insulation material in a high voltage DC application.

12. The use according to claim 11, wherein the high voltage DC application is a power cable, a cable accessory, a bushing, or a wire.

## Patentansprüche

1. Hochspannungsgleichstromkabel, umfassend ein elektrisches Isolationsmaterial, wobei das elektrische Isolationsmaterial ein vernetztes Polyolefin umfasst, dass durch Mischen eines Polyolefins mit einer Azoverbindung der Formel (I) 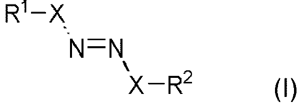 wobei
X für eine Bindung oder eine Oxycarbonylgruppe (-C(O)-O-) steht und
R¹ und R² jeweils unabhängig aus unpolaren Gruppierungen ausgewählt sind,
erhältlich ist.

2. Hochspannungsgleichstromkabel nach Anspruch 1, wobei es sich bei dem Polyolefin um Polyethylen handelt.

3. Hochspannungsgleichstromkabel nach Anspruch 1 oder 2, wobei R¹ und R² jeweils unabhängig aus Alkyl, Cycloalkyl und Aryl ausgewählt sind.

4. Hochspannungsgleichstromkabel nach Anspruch 1 oder 2, wobei R¹ und R² jeweils unabhängig aus linearem oder verzweigten C₁₋₁₂-Alkyl, C₃₋₁₂-Cycloalkyl und Phenyl, wobei das Phenyl unsubstituiert oder in einer oder zwei Positionen substituiert sein kann, ausgewählt sind.

5. Hochspannungsgleichstromkabel nach Anspruch 1 oder 2, wobei sich bei der Azoverbindung der Formel (I) um Di-tert-butylazodicarboxylat (DBAC) handelt.

6. Hochspannungsgleichstromkabel nach einem der Ansprüche 1 bis 5, wobei das Polyolefin in einer Polymerschmelze mit der Azoverbindung der Formel (I) umgesetzt wird.

7. Hochspannungsgleichstromkabel nach einem der Ansprüche 1 bis 6, wobei das Polyolefin und die Azoverbindung der Formel (I) in einem Extrusionsprozess gemischt werden.

8. Hochspannungsgleichstromkabel nach einem der Ansprüche 1 bis 7, wobei das vernetzte Polyolefin eine wie gemäß der Beschreibung bestimmte Leitfähigkeit von weniger als 10·10⁻¹⁵ S/m aufweist.

9. Verfahren zur Herstellung eines Hochspannungsgleichstromkabels, **gekennzeichnet durch** Mischen eines Polyolefins mit einer Azoverbindung der Formel (I) 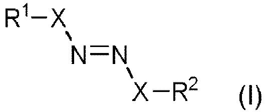 wobei
X für eine Bindung oder eine Oxycarbonylgruppe (-C(O)-O-) steht und
R¹ und R² jeweils unabhängig aus unpolaren Gruppierungen ausgewählt sind,
in einem Extrusionsprozess.

10. Verfahren zur Herstellung eines vernetzten Polyolefins nach Anspruch 9, bei dem es sich bei der Azoverbindung um Di-tert-butylazodicarboxylat (DBAC) handelt.

11. Verwendung eines durch Mischen eines Polyolefins mit einer Azoverbindung der Formel (I) 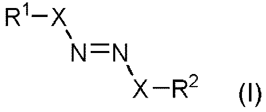 wobei
X für eine Bindung oder eine Oxycarbonylgruppe (-C(O)-O-) steht und
R¹ und R² jeweils unabhängig aus unpolaren Gruppierungen ausgewählt sind,
erhaltenen Polyolefins als elektrisches Isolationsmaterial bei einer Hochspannungsgleichstromanwendung.

12. Verwendung nach Anspruch 11, wobei es sich bei der Hochspannungsgleichstromanwendung um ein Stromkabel, eine Kabelgarnitur, eine Durchführung oder einen Draht handelt.

## Revendications

1. Câble à courant continu haute tension comprenant un matériau d'isolation électrique, dans lequel le matériau d'isolation électrique comprend une polyoléfine réticulée pouvant être obtenue par mélange d'une polyoléfine avec un composé azoïque de formule (I) 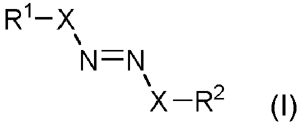 dans laquelle
X est une liaison ou un groupe oxy-carbonyle (-C(O)-O-), et
R¹ et R² sont chacun indépendamment de l'autre choisis parmi les fragments non-polaires.

2. Câble à courant continu haute tension selon la revendication 1, dans lequel la polyoléfine est le polyéthylène.

3. Câble à courant continu haute tension selon la revendication 1 ou 2, dans lequel R¹ et R² sont chacun indépendamment de l'autre choisis parmi les groupes alkyle, cycloalkyle et aryle.

4. Câble à courant continu haute tension selon la revendication 1 ou 2, dans lequel R¹ et R² sont chacun indépendamment de l'autre choisis parmi les groupe alkyle en C₁₋₁₂ à chaîne droite ou ramifiée, cycloalkyle en C₃₋₁₂ et phényle, le groupe phényle pouvant être non-substitué, ou substitué sur une ou deux positions.

5. Câble à courant continu haute tension selon la revendication 1 ou 2, dans lequel le composé azoïque de formule (I) est l'azodicarboxylate de di-tert-butyle (DBAC).

6. Câble à courant continu haute tension selon l'une quelconque des revendications 1 à 5, dans lequel la polyoléfine est mise à réagir avec le composé azoïque de formule (I) dans un bain de polymère.

7. Câble à courant continu haute tension selon l'une quelconque des revendications 1 à 6, dans lequel la polyoléfine et le composé azoïque de formule (I) sont mélangés dans une opération d'extrusion.

8. Câble à courant continu haute tension selon l'une quelconque des revendications 1 à 7, dans lequel la polyoléfine réticulée a une conductivité inférieure à 10 x 10⁻¹⁵ S/m, telle que déterminée conformément à la description.

9. Procédé de fabrication d'un câble à courant continu haute tension, **caractérisé par** le mélange dans une opération d'extrusion d'une polyoléfine avec un composé azoïque de formule (I) 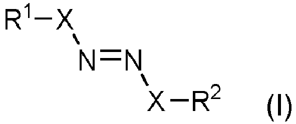 dans laquelle
X est une liaison ou un groupe oxy-carbonyle (-C(O)-O-), et
R¹ et R² sont chacun indépendamment de l'autre choisis parmi les fragments non-polaires.

10. Procédé de fabrication d'une polyoléfine réticulée selon la revendication 9, dans lequel le composé azoïque est l'azodicarboxylate de di-tert-butyle (DBAC).

11. Utilisation d'une polyoléfine réticulée obtenue par mélange d'une polyoléfine avec un composé azoïque de formule (I) 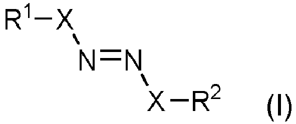 dans laquelle
X est une liaison ou un groupe oxy-carbonyle (-C(O)-O-), et
R¹ et R² sont chacun indépendamment de l'autre choisis parmi les fragments non-polaires,
en tant que matériau d'isolation électrique dans une application à courant continu haute tension.

12. Utilisation selon la revendication 11, dans laquelle l'application à courant continu haute tension est un câble de puissance, un accessoire de câble, une bague ou un fil.
